# EUROPEAN PATENT APPLICATION

(11) **EP 3 148 287 A1**
(43) Date of publication of application: **29.03.2017**
(21) Application number: 15832307.1
(22) Date of filing: 15.01.2015
(51) Int. Cl.: H04W 84/12

(54) **ON-BOARD WIRELESS LOCAL AREA NETWORK DEVICE**

(30) Priority: 12.08.2014 CN 201410395791
(71) Applicant: Launch Tech Company Limited, Shenzhen, Guangdong 518129 (CN)
(72) Inventor: LIU, Jun, Shenzhen Guangdong 518129 (CN); WANG, Chaokai, Shenzhen Guangdong 518129 (CN)
(74) Representative: Krauns, Christian
(86) International application number: PCT/CN2015/070724
(87) International publication number: WO 2016/023337

(57) **Abstract**

The present invention discloses an on-board wireless local area network device, comprising: an interface module configured for accessing an OBD system of a vehicle, a main control module connected to the interface module, a power module connected to the interface module and the main control module, and is configured for obtaining electric power from the OBD system and providing electric power to the on-board wireless local area network device. Wherein, the main control module comprises a first Wi-Fi module configured for establishing a wireless local area network and a second Wi-Fi module configured for accessing an external wireless local area network. The technical solution provided by the present invention can achieve Wi-Fi function by use of vehicle resources.

## Description

### TECHNICAL FIELD

The present application relates to the technical field of communication, and more particularly, relates to an on-board wireless local area network device.

### BACKGROUND

At present, wireless technology is applied more and more widely and maturely, for example, the application of Wi-Fi (Wireless-Fidelity) technology in handheld devices, buses, motor trains, subways, especially in smart phones in recent years, has already been widespread.

However, existing Wi-Fi devices are usually arranged in public areas, office areas, or houses, and are fixed and immovable; when users leave public areas, office areas, or houses, they are unable to access the Internet via their Wi-Fi devices. Although some existing smart phones support the Wi-Fi hotspot function, the Wi-Fi hotspot function provided by the smart phones themselves are restrained greatly, for example, when a mobile phone actuates its Wi-Fi hotspot function, the power dissipation of the mobile phone is increased, and thus the endurance capability of the mobile phone is weakened. The electric quantity of the mobile phone will be consumed more rapidly, such that the mobile phone may need to be charged frequently and many cables and power supply accessories may need to be added.

### BRIEF SUMMARY

The present application provides an on-board wireless local area network device for achieving a Wi-Fi function by use of vehicle resources.

In one aspect, the present invention provides an on-board wireless local area network device, comprising:
an interface module configured for accessing an OBD (On-board Diagnostics) system of a vehicle;
a main control module connected to the interface module;
a power supply module connected to the interface module and the main control module and configured for obtaining electric power from the OBD system and providing electric power to the on-board wireless local area network device;
wherein the main module comprises:
   a first Wi-Fi module configured for establishing an wireless local area network; and
   a second Wi-Fi module configured for communicating with an external wireless local area network.

Optionally, the on-board wireless local area network device further comprises:
a diagnosing module connected to the interface module;
wherein the diagnosing module is configured for reading vehicle operating data of the vehicle via the interface module, and performing a fault diagnosis for the vehicle according to the read vehicle operating data of the vehicle when receiving an input diagnostic instruction.

Optionally, the diagnosing module is further configured for: when a mobile terminal accesses the wireless local area network established by the first Wi-Fi module and the diagnosing module receives an instruction for obtaining the vehicle operating data from the mobile terminal, sending the vehicle operating data to the mobile terminal via the wireless local area network.

Optionally, the diagnosing module is further configured for uploading the vehicle operating data to the Cloud Server when the second Wi-Fi module accesses the external wireless local area network.

Optionally, the diagnosing module is constructed by a diagnosing chipset with a model number of JV700 and a digital process unit.

Optionally, the main control module further comprises:
a wireless network communication module connected to the first Wi-Fi module;
the wireless network communication module comprises a SIM card connector configured for connected with a SIM card with a customer identification module.

Optionally, the main control module further comprises:
an acceleration sensor configured for detecting an acceleration of the vehicle.

Optionally, wherein, the main control module further comprises:
a gyroscope sensor configured for detecting an angular speed of the vehicle.

Optionally, the main control module further comprises:
a positioning module configured for positioning the vehicle.

Optionally, the main control module further comprises:
a Bluetooth module configured for communicating with external devices via Bluetooth.

It can be known from the above-mentioned technical solutions of the present invention that the on-board wireless local area network device of the present invention can be directly mounted on the OBD system of the vehicle for use, the power supply module of the on-board wireless local area network device utilizes electric power of the vehicle, that is, obtains electric power from the OBD system and provides electric power to the on-board wireless local area network device, so that it can be ensured that the power supply for the on-board wireless local area network device is uninterrupted, and thus the problem that existing Wi-Fi hotspot devices cannot be used for a long time due to their quick consumption of electricity quantity is solved. In addition, on one hand, the main control module of the on-board wireless local area network device can establish a wireless local area network and provide the Wi-Fi hotspot function, so that it is convenient for a user to access the wireless local area network via a mobile terminal to surf the web and enjoy internet information services. On the other hand, the mobile terminal can also access an external wireless local area network and serve as a terminal within the external wireless network, thereby realizing a dual mode Wi-Fi function.

### BRIEF DESCRIPTION OF THE DRAWINGS

In order to explain the embodiments of the present invention or the technical solutions in the prior art more clearly, a brief introduction regarding the accompanying drawings that need to be used for describing the embodiments or the prior art is given below; it is obvious that the accompanying drawings described as follows are only some embodiments of the present invention, for those skilled in the art, other drawings can be obtained according to the current drawings on the premise of paying no creative labor.
FIG. 1 illustrates a structural schematic diagram of an on-board wireless local area network device according to one embodiment of the present invention;
FIG. 2 illustrates a main control module according to the embodiment of the present invention;
FIG. 3-a illustrates a functional block diagram of the on-board wireless local area network device according to the embodiment of the present invention set to be under an AP working mode;

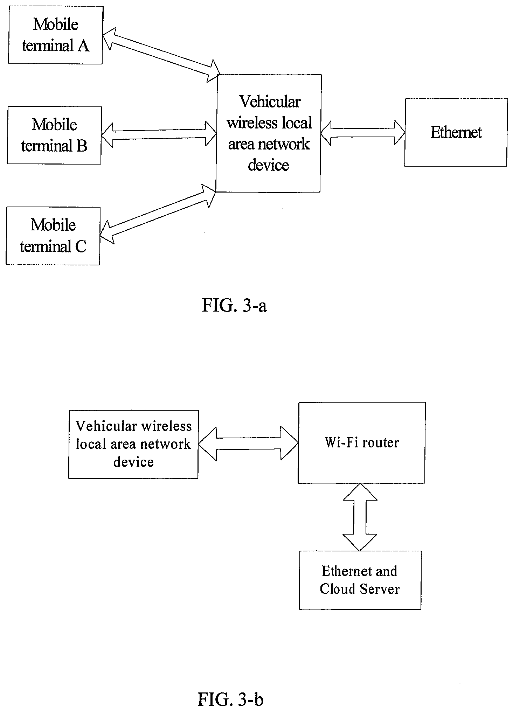

FIG. 3-b illustrates a functional block diagram of the on-board wireless local area network device according to the embodiment of the present invention set to be under a STA working mode;

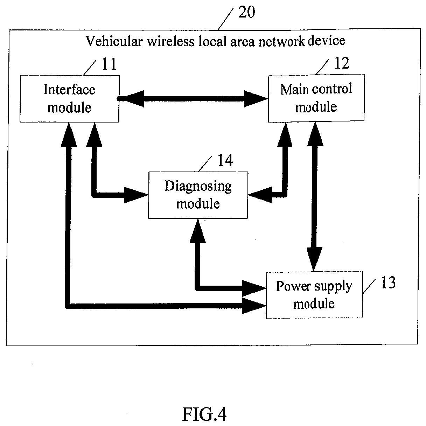

FIG. 4 illustrates a structural schematic diagram of an on-board wireless local area network device according to another embodiment of the present invention.

### DETAILED DESCRIPTION OF THE PREFERRED EMBODIMENT

In order to make the purpose, the technical features, and the advantages of the present invention be clearer and more comprehensible, the technical solution of the embodiments of the present invention will be described clearly and completely with reference to the accompanying drawings of the embodiments of the present invention. It is obvious that the described embodiments are not all embodiments but only some embodiments of the present invention. On the basis of the embodiments of the present invention, all other embodiments obtained on the premise of paying no creative labor by those skilled in the art should be included by the protection scope of the present invention.

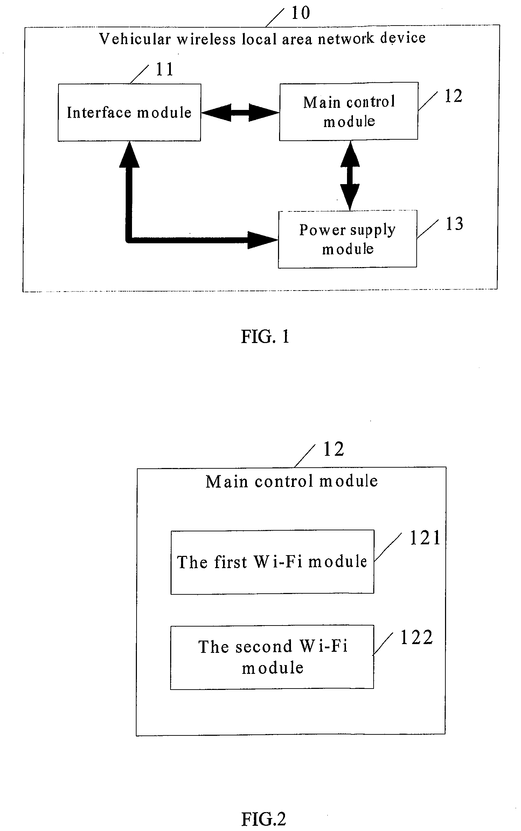

An on-board wireless local area network device according to one embodiment of the present invention is described below, please refer to figure 1, an on-board wireless local area network device 10 of the embodiment of the present invention comprises:
an interface module 11 configured to be connected to an OBD (On-Board Diagnostic) system of a vehicle;
a main control module 12 connected to the interface module 12;
a power supply module 13 connected to the interface module 11 and the main control module 12 and configured for obtaining electric power from the OBD system and providing electric power to the on-board wireless local area network device;
wherein, as shown in figure 2, the main control module 12 comprises a first Wi-Fi (Wireless-Fidelity) module 121 configured for establishing an internal wireless local area network (that is, a Wireless-Fidelity network), and a second Wi-Fi module 122 configured for connected to an external wireless local area network (that is, another Wireless-Fidelity network).

In this embodiment of the present invention, the interface module 11 comprises an OBD plug (it is generally an OBD plug with sixteen pins), the on-board wireless local area network device 10 is inserted into an OBD connector of the vehicle via the OBD plug so as to be connected to the OBD system of the vehicle.

In this embodiment of the present invention, the main control module 12 establishes the wireless local area network via the first Wi-Fi module 121, that is, via the first Wi-Fi module, setting the vehicle wireless area network device to be in an AP (Access Point) work mode, on one hand, a Wi-Fi hotspot is provided for helping a user to access the Wi-Fi hotspot via a mobile terminal (such as a smart phone, a tablet computer, an on-board terminal, or a personal digital assistant) and thereby surf the web and enjoy internet information services such as email, website (i.e., Web), streaming media, and so on; on the other hand, the established wireless local area network can serve as a local wireless local area network to provide data channel, so that it is convenient for a user to operate application programs (APP) installed in the mobile terminal, communicate via TCP (Transmission Control Protocol) / IP (Internet Protocol), and realize a data interactive communication among various systems of the vehicle locally, wherein the interacted data can be vehicle operating data (such as fault information, data flows, position information, a status of the vehicle, and so on). Figure 3-a shows a functional block diagram of the vehicle wireless local area network device set to be in the AP work mode, on one hand, a plurality of mobile terminals (such as a mobile terminal A, a mobile terminal B and a mobile terminal C shown in figure 3-a) access the Wi-Fi hotspot so as to access the internet; on the other hand, the mobile terminal A, the mobile terminal B and the mobile terminal C can realize data interactions with the on-board wireless local area network device locally via the TCP or IP protocol.

In this embodiment of the present invention, the main control module 12 is connected to the external wireless local area network via the second Wi-Fi module 122, that is, via the second Wi-Fi module 122, setting the on-board wireless local area network device 10 to be in a STA (station) mode, that is, a user terminal wireless access work mode; the on-board wireless local area network device 10 is connected to the Ethernet by connected an external (such as in the ambient around the vehicle) wireless local area network (i.e., a Wi-Fi hotspot), that is, via a gateway, at the moment, the on-board wireless local area network device 10 serves as a TCP client-side, and can upload a data flow (such as operating data of a vehicle connected with the on-board wireless local area network device) to a Cloud Server, the Cloud Server can store and process these information, and can also transmit a command to the on-board wireless local area network device 10 to control the on-board wireless local area network device 10, thereby providing network information services. Wherein, the above-mentioned Cloud Server includes but is not limited to a TCP/ UDP (User Datagram Protocol) server, a HTTP (Hypertext Transfer Protocol) server, a POP (Post Office Protocol) server, a FTP (File Transfer Protocol) server, an ICMP (Internet Control Message Protocol) server, a SMTP (Simple Mail Transfer Protocol) server, a Telnet protocol server, and so on. Figure 3-b shows a functional block diagram of the on-board wireless local area network device set to be in the STA work mode, the on-board wireless local area network device can access an external Wi-Fi router (i.e., a Wi-Fi hotspot) to be connected to the Ethernet and the Cloud Server.

It needs to note that the first Wi-Fi module 121 and the second Wi-Fi module 122 can be the same Wi-Fi module, and can also be different Wi-Fi modules, they are not limited herein.

Optionally, on the basis of the embodiment shown in figure 1, as shown in figure 4, an on-board wireless local area network device 20 of another embodiment of the present invention further comprises:
an diagnosing module 14 connected to the interface module 11, the main control module 12, and the power source module 13 respectively;
the diagnosing module 14 is configured for reading the vehicle operating data obtained by the on-board wireless local area network device via the interface module 11 and performing a diagnosis for the vehicle according to the obtained vehicle operating data when receiving an input diagnostic command (for example, when it receives an diagnostic command input from the mobile terminal).

Optionally, the diagnosing module 14 is further configured for: when a mobile terminal accesses the wireless local area network established by the first Wi-Fi module 121 and receives an instruction for obtaining vehicle operating data, transmitting the vehicle operating data to the mobile terminal via the above-mentioned wireless local area network. As shown in figure 3-a, after the mobile terminal accesses the wireless local area network established by the on-board wireless local area network device, the mobile terminal is able to transmit the instruction for obtaining vehicle operating data to the on-board wireless local area network device via the wireless local area network; when the on-board wireless local area network device receives the instruction for obtaining vehicle operating data, the on-board wireless local area network device transmits the vehicle operating data read by the diagnosing module 14 to the mobile terminal via the wireless local area network. Furthermore, the diagnosing module 14 is further configured for uploading the read vehicle operating data to the Cloud Server when the second Wi-Fi module 122 accesses the external wireless local area network.

Optionally, the master chip of the main control module 12 can be constructed by a MTK chipset, certainly, the master chip of the main control module 12 can also be constructed by other processor chips with process capability, and the master chip of the main control module 12 is not limited herein.

Optionally, the diagnosing module 14 is constructed by a diagnosing chip with the model number of JV 700 and a DPU (Digital Process Unit).

Optionally, the main control module 12 further comprises a wireless network communication module connected with the first Wi-Fi module 121 (not shown in figure 4), wherein, the wireless network communication module comprises a SIM (Subscriber Identity Module) card connector configured for mounting a SIM card. When a user inserts a SIM card into the SIM card connector, since the SIM card usually has contained user configuration information, therefore, the wireless network communication module can achieve communication functions (such as 3G communication function and GPRS technology, that is, General Packet Radio Service technology) via the SIM card; particularly, the communication functions which can be realized by the wireless network communication module are determined by the communication functions supported by the SIM card itself.

Optionally, the main control module 12 further comprises an acceleration sensor (not shown) configured for detecting an acceleration of the vehicle connected with the on-board wireless local area device.

Optionally, the main control module 12 further comprises a gyroscope sensor (not shown) configured for detecting an angular speed of the vehicle connected with the on-board wireless local area device.

Optionally, the main control module 12 further comprises a positioning module (not shown) configured for positioning the vehicle connected with the on-board wireless local area device. The positioning module can be, for example, a GPS (Global Position System) module.

Optionally, the main control module 12 further comprises a Bluetooth module configured for communicating with external devices via Bluetooth.

Optionally, the on-board wireless local area network device of the embodiment of the present invention further comprises a reset button and one or more status indicating light(s), the reset button is configured for resetting the on-board wireless local area network device when the on-board wireless local area network device malfunctions. The indicating light(s) is/are configured for indicating the working condition of the on-board wireless local area network device in real-time, the on-board wireless local area network device can comprise, for example, a power status indicating light for indicating the status of a power source, a positioning status indicating light for indicating the positioning status of the positioning module, a wireless communication status indicating light for indicating a communication status of a 3G/GPRS network, a Wi-Fi status indicating light for indicating a Wi-Fi signal status, and so on.

It can be known from the above-mentioned technical solutions that the on-board wireless local area network device of the present invention can be directly mounted on the OBD system of the vehicle for use, the power supply module of the on-board wireless local area network device utilizes electric power resource of the vehicle, that is, obtains electric power from the OBD system and provides electric power to the on-board wireless local area network device, so that it can be ensured that the power supply for the on-board wireless local area network device is uninterrupted, and thus the problem that existing Wi-Fi hotspot devices cannot be used for a long time duo to their quick consumption of electricity quantity is solved. In addition, on one hand, the main control module of the on-board wireless local area network device can establish a wireless local area network and provide the Wi-Fi hotspot function, so that it is convenient for a user to access the wireless local area network via a mobile terminal to surf the web and enjoy internet information services. On the other hand, the mobile terminal can also access an external wireless local area network and serve as a terminal within the external wireless network, thereby realizing a dual mode Wi-Fi function.

Take the main chip of the main control module 12 for example, the relationship among a plurality of system functional modules achieved by the on-board wireless local area network device of another embodiment of the present invention is described in the following. It needs to note that the system functional modules are only exemplary, in actual application, the number of the plurality of system functional modules achieved by the on-board wireless local area network device can be increased or reduced according to actual requirements, and the system functional modules included actually in the on-board wireless local area network device and the relationship among the plurality of the system functional modules are not limited by the embodiment of the present invention.
1. A vehicle fault diagnosing function and a vehicle data flow reading function are achieved by a power supply module (e.g., the power supply module 13 as shown in figure 1) and a diagnosing module (e.g., the diagnosing module 14 as shown in figure 1).
2. A GPS positioning function is achieved by the power supply module, a MTK chipset integrated with GPS, a Bluetooth chip, and a Wi-Fi chip and via adopting an active GPS antenna.
3. A dual mode Wi-Fi communication function is achieved by the power supply module, the Wi-Fi module, and the MTK chipset.
4. A Bluetooth communication function is achieved by the power supply module, a Bluetooth module, and the MTK chipset.
5. A 3G/GPRS communication function is achieved by the power supply module, a 3G module, and the MTK chipset.
6. A base station positioning function is achieved by the power supply module, the 3G module, and the MTK chipset.
7. An acceleration detecting function for every direction of the vehicle is achieved by the power supply module, an acceleration sensor, and the MTK chipset.
8. An angular speed detecting function for every direction of the vehicle is achieved by the power supply module, a gyroscope sensor, and the MTK chipset.
9. A real-time clock function is achieved by the power supply module and the MTK chipset (provided by a real-time clock, and calibrated by the GPS time).
10. A software upgrading function, a diagnostic configuration file upgrading function, and a parameter setting function are achieved by the power supply module, the Bluetooth module, and the MTK chipset.
11. A data storage function under an abnormal network status is achieved by the power supply module and the MTK chipset.
12. A sleeping and awaking function is achieved by the power supply module, the MTK chipset, and a gravity sensor.

It needs to note that, in these embodiments of the present invention, the MTK chipset, the Wi-Fi module, the GPS module and the Bluetooth module, the acceleration sensor and the gyroscope, the power supply module, and so on can be integrated into the same PCB (Print Circuit Board).

Furthermore, in order to enhance the power and the sensitivity of a Wi-Fi signal, the Wi-Fi module can further comprises a PIFA (Planar Inverted F-shaped Antenna), of which the material is a FPC (Flexible Printed Circuit).

In order to enhance overall performance of the on-board wireless local area network device, every module and the PCB hardware of the on-board wireless local area network device of the embodiment of the present invention can be arranged as follows: the overall arrangement of the on-board wireless local area network device is in accordance with the manner of coupled highly and shielded independently. The main control module and the diagnosing module adopt chipset structures to realize small and thin profiles. Regarding the arrangement, the functional modules are independent from each other, modules within different frequency ranges are arranged to be coupled highly and shielded by shield cans, so that the radiation space interference is reduced. Industrial-grade components are selected for ensuring that diagnostic connectors are applied in vehicles stably and reliably. A 3G (the Third Generation Mobile Communication Technology) antenna is mounted on the surface of the on-board wireless local area network device to meet the requirement of radiation space arrangement, and the 3G antenna engages with a main board of the on-board wireless local area network device by means of contacting pins. The GPS antenna is active and built-in, and is arranged to be located on a subordinate diagnosing board so that it is separated from the 3G antenna and the Wi-Fi antenna on the main board, and the radiation space interference is reduced more effectively; the arrangement in the form of shield cans are applied among the modules, so that the on-board wireless local area network device is more suitable for the hostile environment inside a vehicle.

In some embodiments provided by the present application, it should be understood that the apparatus disclosed can be achieved in other ways. For example, the aforementioned apparatus embodiments are schematic merely, for example, the division of the aforementioned modules is just a kind of logic function division, some other divisions can be used in actual implementations, for example, a plurality of modules or components can be combined or integrated into another system, or some features can be omitted or unexecuted. Another point, the displayed or discussed interacted coupling, directly coupling, or communication connection can be indirect coupling or communication connection via some ports, apparatuses or modules, and the form of the coupling or the connection can be electrical, mechanical, in or other types.

An on-board wireless local area network device provided by the present invention are described above, for those skilled in the art, the detailed embodiments and the application scope of the present invention may be modified according to the spirit of the embodiments of the present invention; in conclusion, the content of the specification should not be regarded as being limitation to the present invention.

## Claims

1. An on-board wireless local area network device, comprising:
an interface module configured for accessing an OBD system of a vehicle;
a main control module connected to the interface module;
a power supply module connected to the interface module and the main control module, and is configured for obtaining electric power from the OBD system and providing electric power to the on-board wireless local area network device;
wherein the main module comprises:
a first Wi-Fi module configured for establishing a wireless local area network; and
a second Wi-Fi module configured for communicating with an external wireless local area network.

2. The on-board wireless local area network device according to claim 1, wherein the on-board wireless local area network device further comprises:
a diagnosing module connected to the interface module;
the diagnosing module is configured for reading vehicle operating data of the vehicle via the interface module, and performing a fault diagnosis for the vehicle according to the read vehicle operating data of the vehicle when receiving an input diagnostic instruction.

3. The on-board wireless local area network device according to claim 2, wherein the diagnosing module is further configured for: when a mobile terminal accesses the wireless local area network established by the first Wi-Fi module and the diagnosing module receives an instruction for obtaining the vehicle operating data from the mobile terminal, sending the vehicle operating data to the mobile terminal via the wireless local area network.

4. The on-board wireless local area network device according to claim 2, wherein the diagnosing module is further configured for uploading the vehicle operating data to the Cloud Server when the second Wi-Fi module accesses the external wireless local area network.

5. The on-board wireless local area network device according to any one of claims 2-4, wherein the diagnosing module is constructed by a diagnosing chipset with a model number of JV700 and a digital process unit.

6. The on-board wireless local area network device according to any one of claims 1-4, the main control module further comprises:
a wireless network communication module connected to the first Wi-Fi module;
the wireless network communication module comprises a SIM card connector configured for connecting with a SIM card with a customer identification module.

7. The on-board wireless local area network device according to any one of claims 1-4, wherein the main control module further comprises:
an acceleration sensor configured for detecting an acceleration of the vehicle.

8. The on-board wireless local area network device according to any one of claims 1-4, wherein the main control module further comprises:
a gyroscope sensor configured for detecting an angular speed of the vehicle.

9. The on-board wireless local area network device according to any one of claims 1-4, wherein the main control module further comprises:
a positioning module configured for positioning the vehicle.

10. The on-board wireless local area network device according to any one of claims 1-4, wherein the main control module further comprises:
a Bluetooth module configured for communicating with external devices via Bluetooth.
